# EUROPEAN PATENT SPECIFICATION

(11) **EP 0 549 695 B1**
(45) Date of publication and mention of the grant of the patent: **14.12.1994**
(21) Application number: 91917236.1
(22) Date of filing: 10.07.1991
(51) Int. Cl.: H01M 8/24, H01M 8/12

(54) **APPARATUS AND METHOD OF FABRICATING A MONOLITHIC SOLID OXIDE FUEL CELL**
APPARAT UND VERFAHREN ZUR HERSTELLUNG EINER MONOLITHISCHEN FESTOXIDBRENNSTOFFZELLE
APPAREIL ET PROCEDE POUR FABRIQUER UNE CELLULE A COMBUSTIBLE EN OXYDE SOLIDE MONOLITHE

(30) Priority: 11.09.1990 US 580722; 11.09.1990 US 580886
(43) Date of publication of application: 07.07.1993
(73) Proprietor: AlliedSignal Inc., Morristown, New Jersey 07962-2245 (US)
(72) Inventor: MINH, Nguyen Q., Fountain Valley, CA 90708 (US); HORNE, Craig R., Redondo Beach, CA 90278 (US)
(74) Representative: Poidatz, Emmanuel
(86) International application number: US9104854
(87) International publication number: WO9204740

(56) References cited:
- EP-A- 0 275 661
- US-A- 857 420
- US-A- 4 799 936
- US-A- 4 883 497
- CHEMICAL ABSTRACTS, vol. 114, no. 18, 6 May 1991, Columbus, Ohio, US; abstract no. 167843M, OGURA KAZUMI AND ALL: 'Solid-Electrolyte Fuel Cells', see abstract & JP, A, 02 204 974 (MITSUBISHI HEAVY IND LTD) 14 August 1990
- PATENT ABSTRACTS OF JAPAN, vol. 13, no. 509 (E-846)(3857) 15 November 1989 & JP, A, 01 206 567 (MITSUBISHI HEAVY IND. LTD.) see abstract

## Description

The invention relates to solid oxide fuel cells and more particularly to a method of fabricating the fuel cell core. A fuel cell is basically a galvanic conversion device that electrochemically reacts a fuel with an oxidant within catalytic confines to produce a DC electrical output. in a fuel cell, cathode material defines the passageways for the oxidant and anode material defines the passageways for the fuel, and an electrolyte separates the cathode and anode materials. The fuel and oxidant fluids, typically as gases, are continuously passed through the cell passageways separated from one another. The fuel and oxidant discharges from the fuel cell generally remove the reaction products and heat generated in the cell. The fuel and oxidant are the working fluids and as such are typically not considered an integral part of the fuel cell itself.

The type of fuel cell for which this invention has direct applicability is known as the solid electrolyte or solid oxide fuel cell, where the electrolyte is in solid form in the fuel cell. In the solid oxide fuel cell, hydrogen or a hydrocarbon fuel is preferably used as the fuel and oxygen or air is used as the oxidant, and the operating temperature of the fuel cell is between 700° and 1,100° C.

The hydrogen passing through the fuel cell reacts with oxide ions on the anode to yield water, which is carried off in the fuel flow stream, with the release of electrons into the anode material. The oxygen reacts with the electrons on the cathode surface to form the oxide ions which then pass into the electrolyte material. Electrons flow from the anode through an appropriate external load to the cathode, and the circuit is closed internally by the transport of oxide ions through the electrolyte. The reaction process is well know and more thoroughly delineated in U. S. Patent Nos. 4, 499,663 and 4,816,036.

The electrolyte isolate the fuel and oxidant gases from one another while providing a medium allowing oxygen ion transfer, as well as voltage buildup on opposite sides of the electrolyte. Fuel and oxidant must diffuse away from the flow stream in the respective passageways to the electrolyte and react at or near the boundary of the electrodes (anode or cathode), and electrolyte, where electrochemical conversion occurs. The electrodes provide paths for the internal movement of electrical current within the fuel cell to the cell terminals, which also connect with an external load. The operating voltage across each cell is on the order of 0.7 volts so the individual cells must be placed in electrical series to obtain a useful load voltage.

U.S. Patent No. 4, 476,198 (Ackerman, et al) discloses a monolithic core consisting only of materials active in the electrochemical reactions. The thin composite core walls are shaped to define small passageways. If the core walls are constructed without deformation, they are predicted to have sufficient structural integrity to withstand the fluid pressures generated by gas flow through the passageways and the mechanical stresses due to the weight of the stacked core walls on one another. This monolithic construction would beneficially increase the power density of the fuel cell because of its reduced size and weight.

U.S. Patent No. 4,476,196 (Poeppel, et al) discloses a monolithic core construction having the flow passageways for the fuel and for the oxidant gases extended transverse to one another. The core construction provides that only anode material surround each fuel passageway and only cathode material surround each oxidant passageway, each anode and each cathode material further being selectively sandwiched at spaced opposing sides between electrolyte and interconnect materials. These composite anode and cathode wall structures are alternately stacked on one another (with the separating electrolyte or interconnect material typically being a single common layer) whereby the fuel and oxidant passageways are disposed transverse or in a cross flow relationship to one another.

U.S. Patent No. 4,510,212 (Fraioli) discloses a core construction having both parallel and cross flow paths for the fuel and the oxidant gases. Each interconnect wall of the cell is formed as a sheet of inert support material having therein spaced small plugs of interconnect material, the cathode and anode materials being formed as layers on opposite sides of each sheet and being electrically connected together by the plugs of the interconnect material. Each interconnect wall is formed into a wavy shape and then connected along spaced, generally parallel, line-like contact areas between corresponding spaced pairs of generally parallel electrolyte walls, operable to define one tier of generally parallel flow passageways for the fuel and oxidant gases. Alternate tiers are arranged to have the passageways disposed normal to one another.

Cellular type fuel cell cores (see U.S. Patent No. 4,476,198) of the prior art are made by the process whereby the compositions used for the four materials are put into four distinct slurries. Each slurry is then placed in a reservoir of a squeegee-type device which is pulled over a flat surface and hardens or plasticizes into a layer of the material having the desired thickness. In this manner the electrolyte wall or interconnect wall is formed by a first layer of anode material followed by a layer of either electrode or interconnect material and finally by a layer of the cathode material. The layers are bonded together since the binder system is the same in each layer.

Related U.S. Patent No. 4,816,036 (Kotchick) teaches another method of forming a cellular core, whereby the compositions for the four materials are individually mixed to a plastic consistency and subsequently hot rolled into thin sheets. The thin sheets can then be hot rolled into multilayer tapes, formed, stacked, and fired as a monolith to produce the fuel cell with integral fuel and oxidant manifolding.

Theoretically, the fuel cell stack structure of the above-noted patents should provide exemplary power density. However, problems arise because the fuel cell stacks are formed from arrays of anode and cathode sandwiching either an electrolyte or interconnect material in pliant or green form. The various green constituent layers are stacked on top of each other, appropriately oriented, to form the stack structure. The resultant stack structure is made up of all green, or unsintered, constituent parts. As noted, the components of the stack are made of different materials, and thereby requiring one to try to match the coefficient of thermal expansion and firing shrinkage for the different materials as closely as possible to one another to minimize separation problems. Fuel cell stacks which are made of green precursors which are all cosintered display poor performance due to microcracks which occur in the various layers as a result of the cosintering step if thermal expansion and firing shrinkage matched is not achieved. A resulting cosintered stack produces significantly less current than its theoretical current density due to mixing of reactant gases which is the direct result of the micro-cracks in the stack. In addition, it is difficult to densify the interconnect under conditions suitable for the other cell components. Inadequately densified interconnects allows cross-leakage of reactant gases.

A second problem arises when the multilayer fuel cell stacks of the prior art are densified in that there is migration of the ceramic materials, primarily the interconnect material, into adjacent layers. This migration of the ceramic materials adversely effects the resulting component physical properties of density, porosity, and homogeneity. A third problem is the slumping of the corrugations during co-firing. As the size of the fuel cell structure increases the green corrugated layers are not stiff enough to support the structure weight during the heat treatment process. Accordingly, a processing method and the resulting fuel cell which eliminate the problems of microcracks, ceramic migration, and slumping would be desirable.

### SUMMARY OF THE INVENTION

This invention relates to a solid oxide fuel cell and particularly to an improved method of making a core and integral manifolding for such a cell. An object of this invention is to provide an improved method for making a solid oxide fuel cell core of a complicated and compact cross section having many adjacent small passageways for containing the fuel and oxidant gases.

The method of fabricating the fuel cell core comprises the steps of first, individually mixing the anode, cathode, electrolyte and interconnect materials with a binder system. Second, forming thin tapes of the individual layers by either roll milling or slurry tape casting. Third, forming green state multilayer tapes preferably comprising an anode-electrolyte-cathode or an anode-interconnect-cathode. Fourth, cutting and molding the respective green state multilayer tapes into the desired net shape elements. Fifth, assembling and bonding pairs of anode-interconnect-cathode elements (or alternatively simply interconnect elements) and anode-electrolyte-cathode elements. Sixth, densifying the assembled pairs of elements. Seventh, stacking and bonding the densified pairs of elements by wetting the contacting surfaces with a bonding agent to promote interbonding of the contacting surfaces to form a stacked assembly. Finally, densifying the stacked assembly to form a monolithic core assembly.

### BRIEF DESCRIPTION OF THE DRAWINGS

Fig. 1 is a perspective view, partially broken away for clarity of a fuel cell formed according to the present invention;
Fig. 2 is a partial, enlarged sectional view when taken along line 2-2 of Fig. 1;
Figs. 3 A & B are plan views of the individual electrolyte and interconnect elements;
Fig. 4 is a perspective view of an alternative configuration for a fuel cell formed according to the present invention;
Fig. 5 is a partial, enlarged sectional view of a portion of the fuel cell of Fig. 4.
Fig. 6 is a diagrammatic depiction of the two-step firing process required to form a fuel cell of the present invention.
Figs. 7 A, B, & C are exploded views of portions of alternative arrangements for the fuel cell core structure.

### DETAILED DESCRIPTION OF THE INVENTION

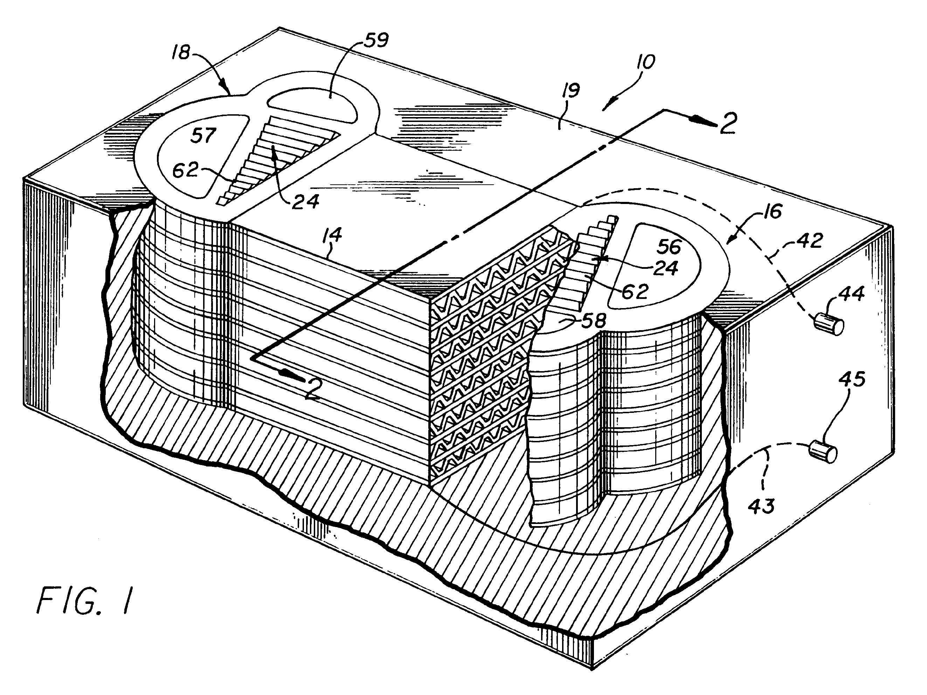

Fig. 1 shows a monolithic solid oxide fuel cell (MSOFC) 10 of the present invention including a fuel cell core 14 and inlet and outlet manifolding, 16 and 18, at each end of the core 14. The core and manifolds are located within and surrounded by suitable insulation 19. Not shown are supply lines connected to suitable fuel and oxidant sources.

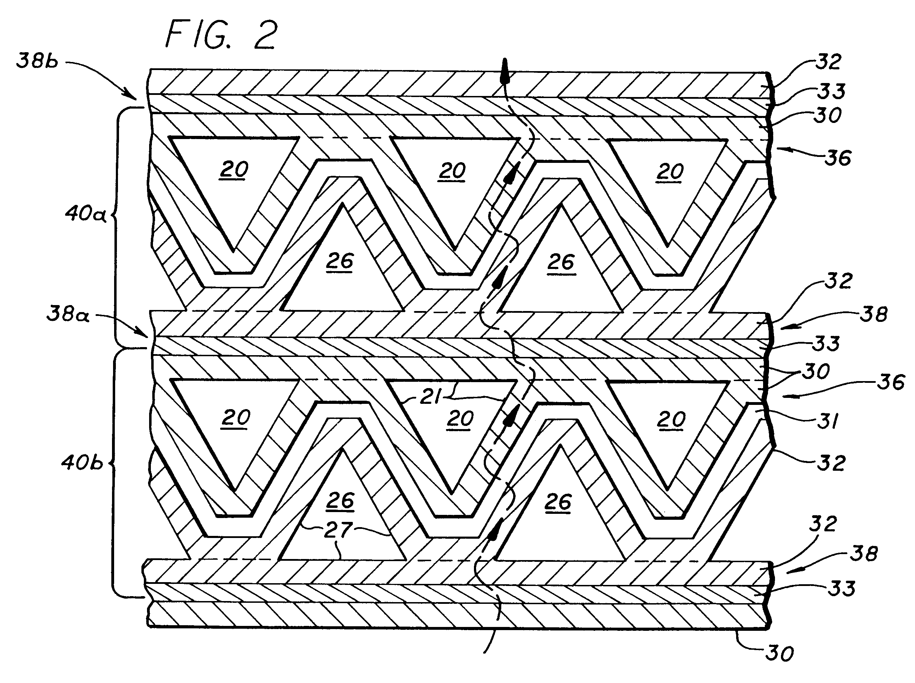

Fig. 2 illustrates an enlarged cross-section of the fuel cell core 14 for the MSOFC 10 of Fig. 1. Within fuel cell core 14 are formed a plurality of fuel passageways 20 and oxidant passageways 26 which are disposed parallel to one another and alternately adjacent one another. The fuel passageways 20 are preferably formed with only an anode material 30 defining the exposed fuel passageway walls 21 while the oxidant passageways 26 are preferably formed with only a cathode material 32 defining the exposed oxidant passageway walls 27. Adjacent fuel and oxidant passageways 20 and 26 are separated by either an electrolyte wall 36 or by an interconnect wall 38. The electrolyte wall 36 comprises thin layers of electrolyte material 31 sandwiched between the anode material 30 and the cathode material 32 forming a trilayer. The interconnect wall 38 comprises a thin trilayer of interconnect material 33 sandwiched between anode material 30 and cathode material 32 to form a trilayer. Two interconnect walls 38 can define the limit of one cell unit 40, however in the overall fuel cell 10, two adjacent cell units 40 share an interconnect wall 38.

The anode, cathode, electrolyte, and interconnect materials 30, 32, 31, and 33 are selected and modified to comply with the following requirements: (1) electrically conductive aspects of the cathode, anode, and interconnect; (2) the ionic transport and electronic isolation aspect of the electrolyte; and (3) the gas porosity property of the cathode and anode and the gas impervious property of the electrolyte and interconnect. Likewise the structural integrity, thermal expansion and contraction ratios, and chemical compositions of the composite monolithic core are designed for the specific operational parameters of temperature, pressure, gas flow rates, voltage, and current densities necessary to provide optimal efficiency.

In a preferred embodiment of the invention, the interconnect and the electrolyte layers are thin (0.002-0.005 cm) while the sandwiching cathode and anode layers are perhaps the same thickness or possibly up to perhaps ten times this thickness (0.002-0.05 cm).

The MSOFC 10 provides increased power density due to the increased active exposure areas of fuel and oxidant per the corresponding unit flow path volume, and due further to having only the active materials (the anode, cathode, electrolyte, and interconnect) in the fuel cell core 14. The fuel and oxidant passageways 20 and 26, of the core 14 can be very small, and likewise the fuel and oxidant passageway walls 21, 27 can be thin but yet self supporting over the small distances across the defined fuel and oxidant passageways 20, 26, making possible shorter current paths and reduced resistance losses, and minimizing diffusion losses by eliminating thick supports entirely.

The inlet and outlet manifolds, 16 and 18, each include an oxidant conduit 58, 59 and a fuel conduit 56, 57 and a turning section generally designated by the numeral 24. Turning section 24 defines a plurality of fuel manifold passages 62 and a plurality of oxidant manifold passages 64 as will be described later.

It is envisioned that the MSOFC 10 of the present invention can be used with parallel flow, counter flow or cross flow of the two working fluids. For the purpose of clarity it is assumed that a parallel flow system is being used and therefore manifold 16 shall be referred to as the inlet manifold defining a fuel inlet conduit 56 and an oxidant inlet conduit 58 and manifold 18 shall be referred to as the outlet manifold defining a fuel outlet conduit 57 and an oxidant outlet conduit 59. Each manifold further includes the turning sections 24.

Further to the above, it will be recognized by those skilled in the pertinent art that the electrochemically active fuel cell core of the MSOFC 10 is combined with conduits carrying fuel and oxidant to and from the fuel cell core 14, making a complete functional fuel cell when attached to electrical conductors 42, 43, and encased in the thermal insulation 19. The conductors 42, 43 extend through the insulation 19 to terminals 44, 45 external thereto.

Unfortunately, the manifolding of a fuel cell is conventionally not electrochemically active so that the power and weight density of the fuel cell suffer, especially in the case of a parallel flow fuel cell. Also, conventionally, the conduits of the fuel cell are separate pieces so that seals must be provided to prevent leakage of fuel and oxidant. As will be fully appreciated upon understanding this disclosure, these limitations of the conventional fuel cells are avoided by the preferred embodiments of the present invention.

Gaseous fuel is conveyed from a source (not shown) to the fuel inlet conduit 56 formed within the inlet manifold 16 for flow through the fuel manifold passages 62 and then through the fuel passageways 20 in the fuel cell core 14 toward the fuel outlet conduit 57 formed within the outlet manifold 18. Likewise, oxidant is carried from a source (not shown) to the oxidant inlet conduit 58 formed within the inlet manifold 16 for flow through the oxidant manifold passages 64 and in turn for flow through the oxidant passageways 26 toward the oxidant outlet conduit 59 formed within the outlet manifold 18. The fuel and oxidant react electrochemically across the electrolyte walls 36 separating the fuel and oxidant in the fuel cell core 14. Fuel and oxidant not consumed are discharged through the outlet manifold 18 and subsequently may be combusted with the other reaction products from the MSOFC 10 in an appropriate combustion chamber (not shown).

As can be best seen in Fig. 2, each electrolyte wall 36 is comprised of the layer of electrolyte material 31 sandwiched between the layer of anode material 30 and the cathode material 32. Electrolyte wall 36 electrochemically reacts the fuel and oxidant being conveyed in the fuel and oxidant passageways 20 and 26, respectively, to develop an electrical potential across the electrolyte wall 36. Further, fc all of the electrolyte walls 36 thus confined between any pair of adjacent interconnect walls (38a and 38b, for example), there is an in-series electrical hookup of the cell units (40a, 40b, for example). The electrolyte walls 36 are corrugated, or backfolded between the interconnect walls 38 so that the fuel and oxidant passageways 20 and 26 are likewise alternately disposed between any pair of adjacent interconnect walls 38.

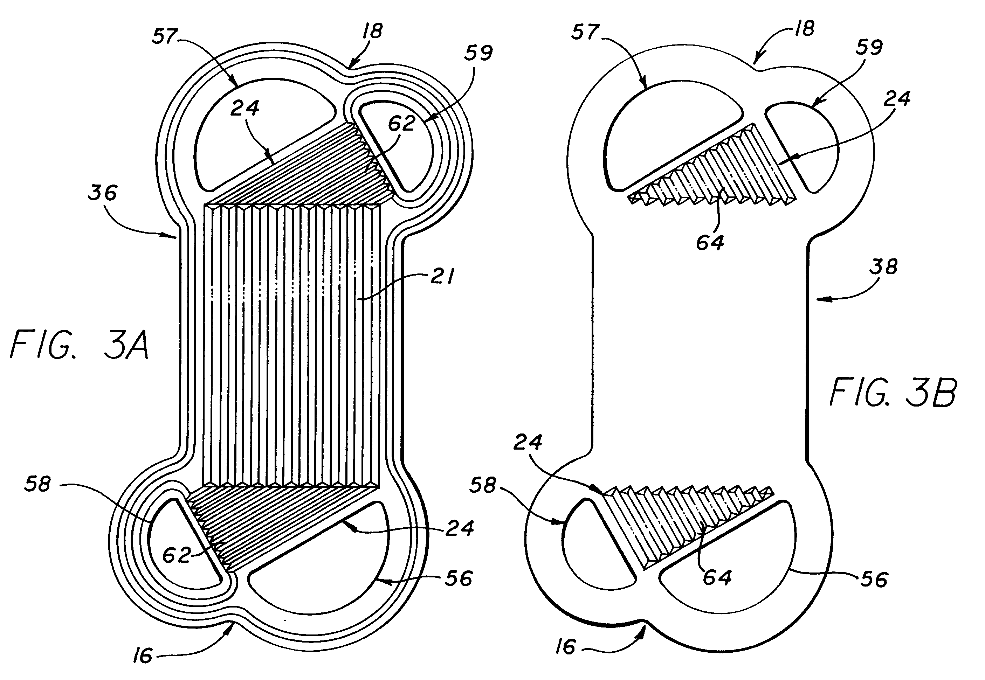

Shown in Figs. 1 and 3 is the manifolding system to be used in association with the fuel cell core 14. The inlet manifold 16 and the outlet manifold 18 are similar to each other in their ducting of the fuel and oxidant flows. Each defines oxidant inlet and outlet conduits 58 and 59, and fuel inlet and outlet conduits 56 and 57, for connection to suitable oxidant and fuel sources. As will be described below the manifolding 16 and 18 and the fuel cell core 14 can be formed as an integral piece.

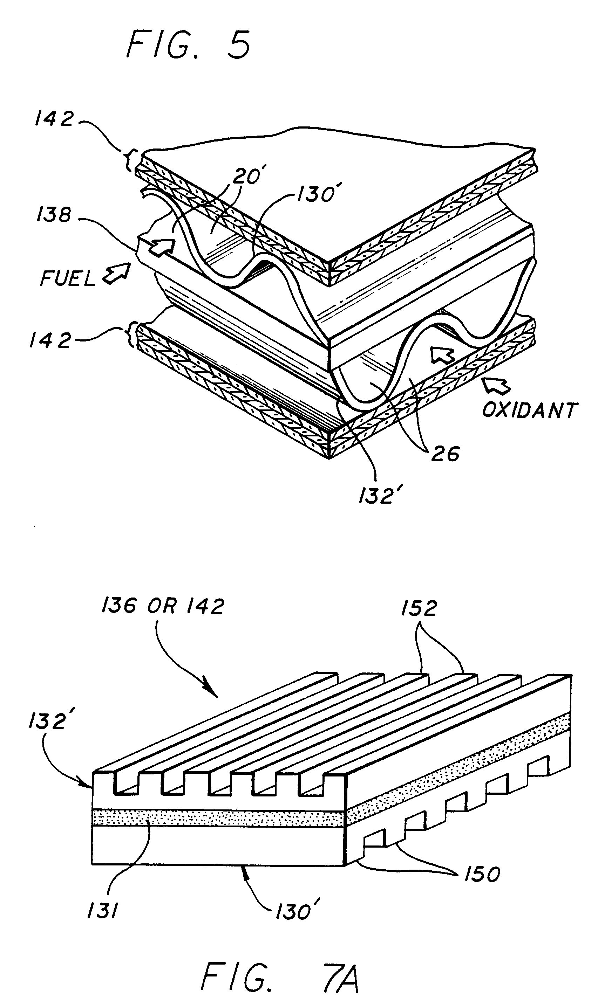

Shown in Figs. 3A and 3B are fuel cell core walls having inlet and outlet manifolds 16 and 18 integral therewith. Fig. 3A discloses the electrolyte wall-36 and Fig. 3B discloses the interconnect wall 38. Shown in Fig. 3A are electrolyte wall impressions or corrugations extending between the manifolds 16 and 18, and which, when alternately stacked with the interconnect walls 38, form the fuel and oxidant passage ways 20, 26. At each end of the corrugations of the electrolyte wall 36 are a plurality of manifold corrugations which extent parallel with each other and with the manifold corrugations at the opposite end of the fuel and oxidant passageways 20, 26. Each manifold corrugation has a height less than the height of the fuel and oxidant passageways 20 and 26 (see Fig. 5). Inlet and outlet fuel manifold passageways 62 extend from the ends of the fuel cell core fuel passageways 20 to the fuel inlet and outlet manifolds 16 and 18. Likewise, inlet and outlet oxidant manifold passageways 64 extend from the ends of the oxidant passageways 26 to the oxidant inlet and outlet conduits 58 and 59 formed internally to manifolds 16 and 18.

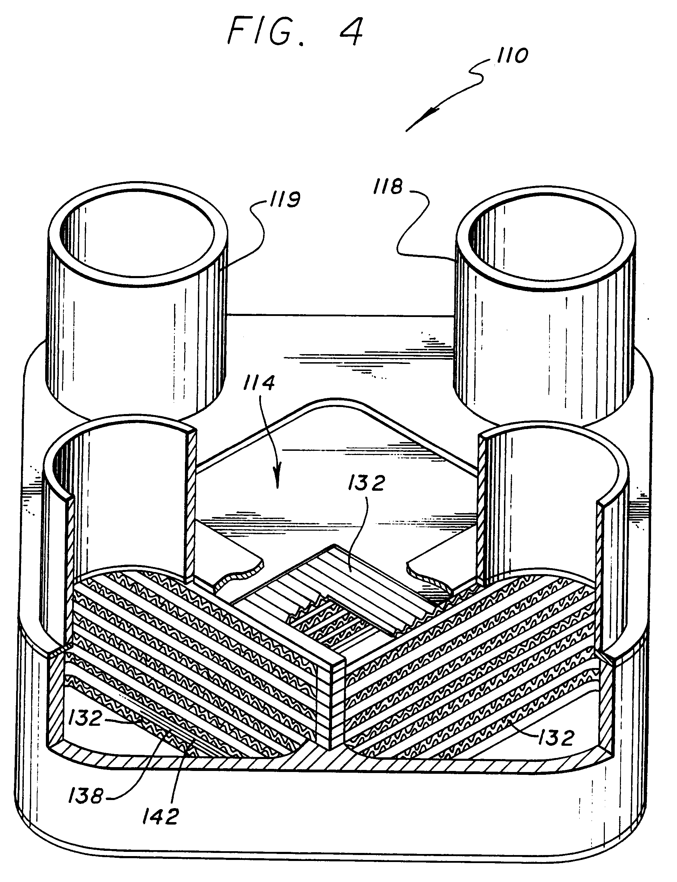

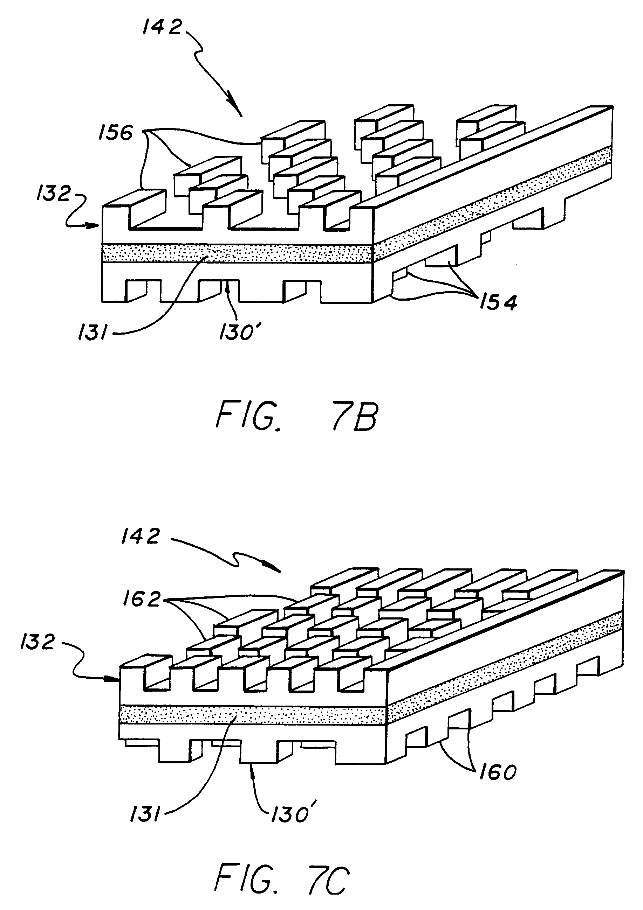

An alternative construction of a cross flow monolithic solid oxide fuel cell (MSOFC) 110 is depicted in Fig. 4 and exploded Figs. 5 and 7, and including a core section 114, oxidant inlet manifold 116, fuel inlet manifold 117, oxidant outlet manifold 118 and fuel outlet manifold 119. An exploded portion of the cross flow MSOFC 110 is depicted in Fig. 5. In the cross flow MSOFC 110, an anode 130, electrolyte 136, and a cathode 132 are formed into an electrolyte trilayer 142. Another anode 130′ and cathode 132′ are formed into a corrugated, backfolded or ribbed (Fig. 7) configuration and attached to opposite sides of the electrolyte 131 or the electrolyte trilayer 142, adjacent the respective similar anode 130 and corrugated cathode 132. The corrugated anode 130′ and cathode 132′ layers are arranged with the corrugations at crossing angles to one another, preferably at right angles. Interconnect layers 138 are stacked and attached to the corrugated anode 130′ and cathode 132′ at opposite sides of the respective corrugations from the planar electrolyte trilayer 142. A plurality of these stacked elements form a complete cross flow MSOFC 110. The method of forming this cross flow MSOFC 110 is analogous to the method of forming the parallel flow configuration of Figs. 1-3, as more fully discussed below.

### PREFERRED METHOD OF FABRICATING THE FUEL CELL

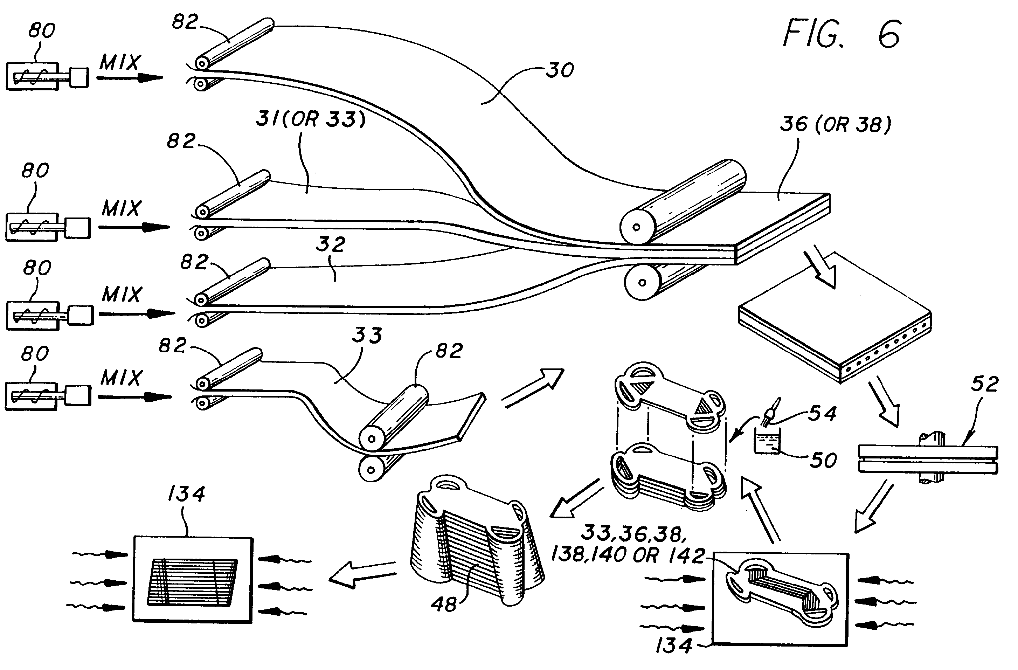

Shown in Fig. 6 is a schematic diagram of the process to manufacture a MSOFC 10 of the present invention. Ceramic powders for each of the materials: strontium-doped lanthanum manganite for the cathode, yttria-stablilized zirconia for the electrolyte, lanthanum chromite-doped with magnesium, calcium, cobalt, or strontium for the interconnect and a cermet of cobalt or nickel metal with stabilized zirconia for the anode, are first prepared so that the particle size ranges from approximately 1 micron to 10 microns. The respective powders are then mixed with a desired binder and plasticizer in a high intensity mixer 80. For example, to form the electrolyte material, zirconium and yttrium are mixed in approximate percentages of 87 to 13 by weight. The binder and plasticizer make up approximately 10 - 40%, by weight, of the total mix and preferably approximately 18%. The amounts of binder and plasticizer being approximately equal. Porosity may be controlled by using larger sized particles, by the addition of pore formers, or by the use of the higher percentage of binder.

Typically, the binder used can be selected from the group comprising: synthetic rubber, thermosetting plastics, polyvinyl alcohol or polymer systems which thermally decompose without cross-linking. The plasticizer chosen is one that is pliable, elastic, and allows low temperature forming of the binder system, e.g. butyl benzyl phthalate, or other solvents.

The ceramic powder, binder and plasticizer are combined in the high intensity mixer 80 at room temperature. The mixing disperses the ceramic powder particles and coats each ceramic particle with binder. The mixing action also raises the temperature through friction to 150°C and softens the plasticizer. Typically, the time for mixing can be 0.5 to 10 minutes with 2 minutes generally being sufficient.

The mixed material is then removed from the mixer and formed into tapes, preferably immediately after mixing to retain the heat generated by the mixing. As shown, the tape forming step is carried preferably out by a roll mill 82. Alternatively, however, the tapes could be formed by other methods including extruding, pressing or tape casting. In the roll milling process each roller is generally heated to approximately 10° - 150°C, depending on the material and the desired thickness, to assist in the rolling operation. Each material i.e. the anode, cathode, electrolyte and interconnect materials, is individually roll milled into tapes 30, 32, 31 and 33 of the desired thickness. It should be noted that the numerals 30, 31, 32 and 33 will hereinafter designate the material as well as a tape or element formed of that material. Thereafter, a multilayer electrolyte or interconnect wall tape 36 or 38 is roll-milled from at least three of the other tapes, i.e. 30, 31, or 33, and 32. During this step each tape is friction bonded to the adjacent tape(s). It is important that no voids are formed between or within the respective tape layers during this rolling step. The resulting multilayer electrolyte or interconnect tapes 36, 38 may be further calendared if required to reduce the thickness.

To provide passageways for the fuel and oxidant through the MSOFC 10, the plurality of fuel and oxidant passageways 20, 26 are formed, for example extending along the anode 30 and cathode 32 respectively. In order to increase the efficiency of the parallel or counterflow MSOFC 10, or 110, it is advantageous to form the passageways 20, 26 by corrugating the trilayer electrolyte tape 36 to achieve greater surface area. This can be accomplished by compression molding, vacuum forming or by gear forming. During this operation, it is important not to get any material flow, thereby retaining the desired layer thicknesses.

Alternatively, for the cross flow MSOFC 110 configuration of fig. 4, a single trilayer electrolyte tape 142 is first formed preferably by the foil milling process or alternatively by a tape casting, extruding or pressing process. As shown for example in Figs. 7 A, B, & C, ribs 150, 152; fins 154, 156; or posts 160, 162; may be formed in the exposed surface of the anode 130 and cathode 132 respectively by displacing contiguous portions of the respective surfaces of the anode 130 and cathode 132 from the plane of the pre-existing flat surface. This may be accomplished by compression molding or pressing, rolling, or by cutting grooves into the trilayer electrolyte 142. As may be readily appreciated, the fins 154, 156 or posts 160, 162 may be so arranged as to force the respective fuel and oxidant to traverse a tortuous pathway along the surfaces of the trilayer electrolyte 142 .

Alternatively, single layer sheets of anode 130′ and cathode 132′ may be first roll milled or tape cast, then formed by a compression molding or similar technique into a corrugated or backfolded configuration, for attachment to the trilayer electrolyte tape 142 as discussed below.

In addition, a planar single layer or interconnect 138 or an (anode-interconnect-cathode) interconnect trilayer 140, is formed by either the roll milling or tape casting processes described above. The resulting trilayer tapes 36, 38, 140, 142 and single layer tapes 130′, 132′, 138 for the respective parallel or crossflow assemblies are then cut or pressed into a plurality of individual elements having preferred gross net shapes (numbered similarly to their respective tapes from which the elements are formed). These gross net shapes preferably include the walls for the manifolds 16, 18, 116, 117, 118, and 119, as well as the corrugations for the passageways 20, 26, 62, 64, if required.

Next, a limited number of the trilayer electrolyte and interconnect elements 36, 38 for the parallel flow configuration, or a single trilayer electrolyte element 142 and one each of the anode elements 130′, and cathode elements 132′ are stacked and bonded to one another. This is preferably accomplished by wetting the contacting surfaces of the elements with a solution which will partially dissolve the entrained binder and/or plasticizer within the elements. By way of example, an isopropyl alcohol solution can be brushed or sprayed onto the elements to dissolve the binder. After the contacting elements are assembled, the alcohol solution evaporates and the binder joins the contacting surfaces. For the parallel flow configuration, the corrugated trilayer 36 electrolyte is bonded to the interconnect trilayer 38 (or interconnect layer 38′). For both the parallel flow and cross flow configurations, this process of joining the green state trilayer elements is preferably limited to less than ten complete cells, and optimally may be limited to single pairs of electrolyte trilayer elements 36 and interconnect trilayer elements 38 (or interconnect elements 38′).

The assembled elements are then heat treated, preferably in a furnace or microwave oven 134, by any one or a combination of radiant, convective, or microwave heating to a temperature sufficient to sinter the respective anode, electrolyte, cathode and interconnect ceramics. During this heating process, the respective ceramic materials are preferably sintered to between twenty five percent to one hundred percent of their desired final density, as measured by the percentage of shrinkage during sintering. Alternatively, the heating process proceeds to a temperature sufficient to sinter the respective ceramic materials to a percentage of the desired final density for the respective materials such that subsequent heating and sintering will result in compatible shrinkage of all ceramic materials. The sintering temperature is selected to achieve the desired properties, including a dense electrolyte, porous anode and cathode, and dense interconnect. The interconnect elements 38, 38′, 138, or 140 may be heat treated individually, to a temperature sufficient to sinter the interconnect ceramic material to a percentage of the desired final density for the interconnect ceramic material such that the interconnect ceramic material will not diffuse into adjacent layers of the stacked array during subsequent heating and sintering of the stacked array. The corrugated electrolyte trilayer 36, or the assembled electrolyte trilayer 142 and anode 130′ and cathode 132′ are separately heat treated as above. These densified components are then preferably allowed to cool to a temperature which allows handling. This initial heat treatment may proceed to the point of only partially sintering the assemblies. Thus, the assembled elements are sintered to at least about twenty five percent of the total sintering required for the final fuel cell as measured by the shrinkage of the materials required to achieve the final desired densities. Preferably, the assembled elements are sintered to between eighty to one hundred percent of their final densities.

The sintered and densified components are then assembled and bonded in their proper sequences into a monolithic structure or stacked assembly 48. During the assembly of the densified components, the contacting surfaces are wetted with a bonding agent 50. The bonding agent 50 is preferably a viscous slurry of anode material or cathode material, and possibly interconnect material, mixed with a compatible binder, plasticizer, and solvent which is brushed 54 or sprayed onto the elements. The selection of the component materials incorporated into the bonding agent 50 is dependent upon the surfaces to be interbonded. To bond two cathode surfaces only cathode materials are used, and similarly to bond an anode surface to an interconnect surface both anode and interconnect materials are used. Similarly, to bond two anode surfaces, only anode materials are used. However, to bond a cathode surface to an interconnect surface both cathode and interconnect materials may be used. By way of example, the bonding agent 50 is formed by combining the selected ceramic component materials with polyvinyl butyryl resin, butyl benzyl phthalate, and isopropyl alcohol into a viscous slurry. Alternatively, the bonding agent 50 may be formed by combining the selected ceramic component materials with materials such as a ceramic paste base, zirconia cement, cellulose-ether compound, a glass-ceramic, or an organo-metallic sol-gel material. Platinum ink or platinum powder may also be added to the bonding agent 50 to improve the electrical conductivity within the MSOFC 10 (or 110).

The stacked assembly 48 is then heat treated, preferably in a furnace or microwave oven 134 operating at temperatures of 1000-1400°C, to sinter and densify the bonding agent 50. By way of example, the stacked assembly 48 is heated at ramp rates of 10-50°C per hour to 1200°C. The temperature is maintained at 1200°C for 1 hour, and then the stacked assembly 48 is allowed to gradually cool down. Microwave heating is preferably carried out at a frequency of 28 Giga-Hertz. In this heat treating procedure, the organics and volatile components of the bonding agent 50 are burned out or outgassed and the component materials (anode, cathode, and interconnect) are sintered to bond adjacent contacting surfaces of the previously sintered and densified subassemblies. This two step sintering and densifying process reduces the thermal induced cracking, slumping of the corrugations, and diffusion of the component materials into adjacent layers while allowing assembly of the monolithic core having a very high number of individual cells. It should be noted that during the assembly of the sintered subassemblies into the stacked monolith and during the heat treating of the monolith, a compressive force may be applied to promote contact and interbonding at the adjacent surfaces.

It should be evident from the foregoing description that the present invention provides many advantages in the field of manufacturing monolithic solid oxide fuel cells.

## Claims

1. A method of constructing a monolithic solid oxide fuel cell (10) comprising the steps of:
mixing ceramic powders required to make an anode (30), a cathode (32), and electrolyte (31), and an interconnect (33) each individually with a binder system to form a batch of each of said materials;
forming thin tapes of each of said material batches;
attaching said anode (30) tape to said electrolyte (31) tape and said cathode (32) tape on an opposite side of said electrolyte (31) tape to form a trilayer electrolyte (36) tape;
shaping said trilayer electrolyte (36) tape to form fuel flow pathways (20) extending along said anode (30) and oxidant flow pathways (26) extending along said cathode (32) of said trilayer electrolyte (36) tape;
cutting said trilayer electrolyte (36) elements having a desired gross net shape;
cutting said interconnect (33) tape to form a plurality of interconnect elements (38) having a desired gross net shape;
heating said trilayer electrolyte (36) elements and said interconnect elements (38) to a temperature sufficient to cause removal of the binder system and at least initiated sintering of the respective ceramic materials;
stacking a plurality of said at least partially sintered trilayer electrolyte (36) elements alternately with a plurality of said interconnect elements (38), subsequent o to said heating step, to form a stacked array (48); and
bonding said stacked array (48) at the contacting surfaces of said alternately stacked trilayer electrolyte (36) and interconnect elements (38).

2. The method of claim 1, wherein said heating step is further characterized by:
raising the temperature of said respective trilayer electrolyte (36) elements and said interconnect elements (38) by any one or a combination of heating processes selected from the group consisting of radiant, convective, and microwave heating to a temperature sufficient to sinter the respective ceramic materials to a least 25% of the total material shrinkage resulting from sintering the ceramic materials to a desired final density.

3. The method of claim 1, wherein said heating step is further characterized by:
raising the temperature of said trilayer electrolyte (36) elements and said interconnect elements (38) to a temperature sufficient to sinter the respective ceramic materials to a percentage of the desired final density for said respective materials such that subsequent heating and sintering of said stacked array (48) will result in compatible shrinkage of all ceramic materials in said stacked array (48) and said interconnect (33) ceramic material will not diffuse into adjacent layers of said stacked array (48) during subsequent heating and sintering of said stacked array (48).

4. A method of claim 1, further characterized by:
wetting one surface of said interconnect elements (38) and the surface of said anode (30) of said trilayer electrolyte (36) elements with an anode bonding agent, said anode bonding agent including powders of said anode (30) ceramic material, binder system materials, and a solvent mixed into a viscous slurry;
wetting the opposite surface of said interconnect elements (38) and the surface of said cathode (32) of said trilayer electrolyte (36) elements with a cathode bonding agent, said cathode bonding agent including powders of said cathode (32) ceramic material, said binder system materials, and a solvent mixed with a viscous slurry.

5. The method according to claim 4 wherein said interconnect elements each include anode ceramic materials and cathode ceramic materials sandwiching them between interconnect ceramic materials in a desired configuration.

6. The method according to any of claims 1-5, further characterized by:
selecting a cermet of cobalt or nickel metal with stabilized zirconia for said anode (30), strontium-doped lanthanum manganite for said cathode (32), yttria-stabilized zirconia for said electrolyte (31), and doped lanthanum chromite for said interconnect (33);
selecting said binder system materials of said anode bonding agent and said cathode bonding agent for compatibility with said anode (30), cathode (32), electrolyte (31), and interconnect (33) materials, said binder system materials including a binder selected from the group consisting of synthetic rubber, plastics, polyvinyl alcohol, polyvinyl butyryl resin, and polymer systems which thermally decompose without cross linking, and a plasticizer selected from the group consisting of butyl benzyl phthalate and solvents of the phthalate group; and
selecting isopropyl alcohol for said solvent of said anode bonding agent and said cathode bonding agent.

7. A subassembly for a monolithic solid oxide fuel cell (10) having a plurality of stacked cells (40), each cell (40) including a cathode (32), an electrolyte (31), and an anode (30), said cells (40) being separated from one another by an interconnect (33), the apparatus comprising:
a plurality of electrolyte (31) elements each including respective layers of at least partially sintered cathode (32) ceramic materials, electrolyte (31) ceramic materials, and anode (30) ceramic materials, said electrolyte (31) elements being configured to include fuel and oxidant flow pathways, said electrolyte (31) elements being shaped in a desired configuration;
a plurality of interconnect elements (38) each including at least partially sintered interconnect (33) ceramic materials in a desired configuration, said interconnect elements (38) alternately stacked with said plurality of electrolyte (31) elements to form a stacked array (48); and
bonding agent means for bonding said at least partially sintered interconnect elements (38) to said at least partially sintered electrolyte (31) elements.

8. The subassembly of claim 7 wherein said bonding agent means further comprises:
an anode bonding agent including powders of said anode (30) ceramic material, a binder system material, and a solvent mixed into a viscous slurry for bonding one surface of said interconnect elements (38) to said anode (30) of said electrolyte (31) elements; and
a cathode bonding agent including powders of said cathode (32) ceramic material, said binder system material, and a solvent mixed into a viscous slurry for bonding the opposite surface of said interconnect elements (38) to said cathode (32) of said electrolyte (31) elements.

9. The subassembly of claim 8, wherein said anode bonding agent and said cathode bonding agent each further include interconnect (33) ceramic materials or platinum powder mixed into said respective viscous slurries.

10. The subassembly of claim 8 wherein said bonding agent means further comprises
a ceramic paste material including at least one of the materials selected from the group consisting of ceramic cements, glass ceramics, an organo-metallic sol-gel material, and zirconium oxide.

## Patentansprüche

1. Verfahren zum Aufbauen einer monolithischen Festoxydbrennstoffzelle (10), mit den Verfahrensschritten:
Mischen von Keramikpulvern, die zum Herstellen einer Anode (30), einer Kathode (32) und eines Elektrolyten (31) und eines Verbindungsmateriales (33) benötigt werden, jeweils einzeln mit einem Bindersystem, um eine Charge jedes der Materialien zu bilden;
Bilden dünner Bänder von jeder der Materialchargen;
Anbringen des Bandes der Anode (30) am Bande des Elektrolyten (31) und des Bandes der Kathode (32) an einander gegenüberliegenden Seiten des Bandes des Elektrolyten (31), um ein dreischichtiges Elektrolytenband (36) zu bilden;
Formen des dreischichtigen Elektrolytenbandes (36) zur Bildung von Brennstoffströmungswegen (20), die sich entlang der Anode (30) erstrecken, und zur Bildung von Oxydansströmungswegen (26), die sich entlang der Kathode (32) des dreischichtigen Elektrolytenbandes (36) erstrecken;
Schneiden von Elementen des dreischichtigen Elektrolyten (36) mit einer gewünschten groben Nettoform;
Schneiden des Bandes des Verbindungsmateriales (33) zur Bildung einer Mehrzahl von Verbindungselementen (38) mit einer gewünschten groben Nettoform;
Erhitzen der Elemente des dreischichtigen Elektrolyten (36) und der Verbindungselemente (38) auf eine ausreichende Temperatur, um das Entfernen des Bindersystems und wenigstens den Beginn eines Sinterns der jeweiligen Keramikmaterialien zu verursachen;
Aufeinanderstapeln einer Mehrzahl der mindestens teilweise gesinterten Elemente des dreischichtigen Elektrolyten (36) abwechselns mit einer Mehrzahl der Verbindungselemente (38) im Anschlusse an den Erhitzungsschritt, um eine gestapelte Reihe (48) zu bilden; und
Binden der gestapelten Reihe (48) an den Berührungsflächen der abwechselnd gestapelten Elemente des dreischichtigen Elektrolyten (36) und des Verbindungsmateriales (38).

2. Verfahren nach Anspruch 1, bei dem der Erhitzungsschritt ferner wie folgt gekennzeichnet ist:
Erhöhen der Temperatur der Elemente des dreischichtigen Elektrolyten (36) und der Verbindungselemente (38) durch ein aus der aus einer Strahlungs-, Konvektions- und Mikrowellenheizung bestehenden Gruppe ausgewählten Erhitzungsverfahren oder eine Kombination davon auf eine Temperatur, die ausreicht, um die jeweiligen Keramikmaterialien auf wenigstens 25% der gesamten Materialschrumpfung zu sintern, die sich aus dem Sintern der Keramikmaterialien auf eine gewünschte Enddichte ergeben.

3. Verfahren nach Anspruch 1, bei dem der Erhitzungsschritt ferner wie folgt gekennzeichnet ist:
Erhöhen der Temperatur der Elemente des dreischichtigen Elektrolyten (36) und der Verbindungselemente (38) auf eine ausreichende Temperatur, um die jeweiligen Keramikmaterialien auf einen Prozentsatz der gewünschten Enddichte für die jeweiligen Materialien derart zu sintern, dass das anschliessende Erhitzen und Sintern der gestapelten Reihe (48) zu einer miteinander verträglichen Schrumpfung aller Keramikmaterialien in der gestapelten Reihe (48) führt und das keramische Verbindungsmaterial (33) während des anschliessenden Erhitzens und Sinterns der gestapelten Reihe (48) nicht in benachbarte Schichten der gestapelten Reihe (48) diffundiert.

4. Verfahren nach Anspruch 1, das ferner durch folgendes gekennzeichnet ist:
Befeuchten einer Fläche der Verbindungselemente (38) und der Fläche der Anode (30) der Elemente des dreischichtigen Elektrolyten (36) mit einem Anodenbindemittel, welches Anodenbindemittel Pulver des Keramikmateriales der Anode (30), Bindersystemmaterialien und ein Lösungsmittel aufweist, die zu einer viskosen Aufschlämmung gemischt werden;
Befeuchten der gegenüberliegenden Fläche der Verbindungselemente (38) und der Fläche der Kathode (32) der Elemente des dreischichtigen Elektrolyten (36) mit einem Kathodenbindemittel, welches Kathodenbindemittel Pulver des Keramikmateriales der Kathode (32), die Bindersystemmaterialien und ein Lösungsmittel aufweist, die mit einer viskosen Aufschlämmung gemischt werden.

5. Verfahren nach Anspruch 4, bei dem die Verbindungselemente jeweils Anodenmaterialien und Kathodenmaterialien aufweisen, die in einer gewünschten Konfiguration sandwichartig zwischen keramischen Verbindungsmaterialien angeordnet werden.

6. Verfahren nach einem der Ansprüche 1-5, das ferner durch folgendes gekennzeichnet ist:
Auswählen eines Cermet von Kobalt- oder Nickelmetall mit stabilisiertem Zirkonoxyd für die Anode (30), von strontiumgedoptem Lanthanmanganit für die Kathode (32), von ytriumoxydstabilisiertem Zirkonoxyd für den Elektrolyten (31) und von gedoptem Lanthanchromit für das Verbindungsmaterial (33);
Auswählen der Materialien für das Bindersystem des Anodenbindemittels und des Kathodenbindemittels zur Verträglichkeit mit den Materialien der Anode (30), der Kathode (32), des Elektrolyten (31) und der Verbindung (33), welche Materialien für das Bindersystem einen aus der aus synthetischem Gummi, Kunststoffen, Polyvinylalkohol-, Polyvinylbutyrylharz sowie Polymersystemen, die sich ohne Vernetzung thermisch zersetzen, bestehenden Gruppe ausgewählten Binder umfassen, sowie einen aus der aus Butylbenzylphthalat und Lösungsmitteln der Phthalatgruppe ausgewählten Weichmacher; und
Auswählen von Isopropylalkohol für das Lösungsmittel des Anodenbindemittels und des Kathodenbindemittels.

7. Unterbaugruppe für eine monolithische Festoxydbrennstoffzelle (10) mit einer Mehrzahl von gestapelten Zellen (40), von denen eine jede Zelle (40) eine Kathode (32), einen Elektrolyten (31) und eine Anode (30) aufweist, wobei die Zellen (40) durch ein Verbindungsmaterial (33) voneinander getrennt sind, welche Vorrichtung folgendes aufweist:
eine Mehrzahl von Elementen des Elektrolyten (31), von denen ein jedes jeweils Lagen von wenigstens teilweise gesinterten Keramikmaterialien für die Kathode (32), Keramikmaterialien für den Elektrolyten (31) und Keramikmaterialien für die Anode (30) aufweist, wobei die Elemente des Elektrolyten (31) derart konfiguriert sind, dass sie Strömungswege für Brennstoff und ein Oxydans aufweisen, und die Elemente des Elektrolyten (31) in eine gewünschte Konfiguration geformt sind;
eine Mehrzahl von Verbindungselementen (38), von denen ein jedes zumindest teilweise gesinterte Keramikmaterialien für die Verbindung (33) in einer gewünschten Form aufweist, wobei die Verbindungselemente (38) abwechselnd mit der Mehrzahl von Elementen des Elektrolyten (31) gestapelt sind, um eine gestapelte Reihe (48) zu bilden; und
eine Einrichtung mit einem Bindemittel zum Binden der zumindest teilweise gesinterten Verbindungselemente (38) an die wenigstens teilweise gesinterten Elemente des Elektrolyten (31).

8. Unterbaugruppe nach Anspruch 7, bei der die Einrichtung mit einem Bindemittel ferner folgendes aufweist:
ein Anodenbindemittel, welches Pulver des Keramikmateriales der Anode (30), ein Bindersystemmaterial und ein Lösungsmittel aufweist, die zu einer viskosen Aufschlämmung zum Binden einer Fläche der Verbindungselemente (38) an die Anode (30) der Elemente des Elektrolyten (31) gemischt sind; und
ein Kathodenbindemittel mit Pulver des Keramikmateriales der Kathode (32), einem Bindersystemmaterialien und einem Lösungsmittel, die zu einer viskosen Aufschlämmung zum Binden der gegenüberliegenden Fläche der Verbindungselemente (38) an die Kathode (30) der Elemente des Elektrolyten (31) gemischt sind.

9. Unterbaugruppe nach Anspruch 8, bei der das Anodenbindemittel und das Kathodenbindemittel des weiteren jeweils Keramikmaterialien für die Verbindung (33) oder in die jeweiligen viskosen Aufschlämmungen eingemischtes Platinpulver aufweisen.

10. Unterbaugruppe nach Anspruch 8, bei der die Einrichtung mit einem Bindemittel ferner folgendes aufweist:
ein keramisches Pastenmaterial, wobei wenigstens eines der Materialien aus der aus Keramikkleber, Glaskeramik, einem organo-metallischen Sol-Gel-Material und Zirkonoxyd bestehenden Gruppe ausgewählt ist.

## Revendications

1. Procédé de fabrication d'une cellule à combustible en oxyde solide monolithique (10) comportant les opérations de:
- mélanger des poudres de céramique nécessaires à la fabrication d'une anode (30), d'une cathode (32), d'un électrolyte (31), et d'une interconnexion (33), de façon individuelle avec une composition liante pour obtenir un volume de pâte de chacun de ces matériaux;
- réaliser des bandes épaisses de chacun de ces volumes de pâte desdits matériaux;
- fixer la bande anode (30) à la bande électrolyte (31) et la bande cathode (32) sur l'autre face de la bande d'électrolyte (31) pour réaliser une bande d'électrolyte à trois couches (36);
- mettre en forme ladite bande d'électrolyte à trois couches (36) pour réaliser les passages d'écoulement du combustible (20) s'étendant le long de l'anode (30) et les passages d'écoulement de l'oxydant (26) s'étendant le long de la cathode (32) de ladite bande d'électrolyte à trois couches (36);
- découper les éléments d'électrolyte à trois couches (36) présentant une forme nette à l'état brut désirée;
- découper ladite bande d'interconnexion (33) pour réaliser une pluralité d'éléments d'interconnexion (38) présentant une forme nette à l'état brut désirée;
- chauffer les éléments d'électrolyte à trois couches (36) et les éléments d'interconnexion (38) à une température suffisante pour éliminer la composition liante et au moins commencer le frittage des éléments céramiques respectifs;
- empiler une pluralité desdits éléments d'électrolyte à trois couches (36) au moins partiellement frittés en alternance avec une pluralité desdits éléments d'interconnexion (38), après ladite opération de chauffage, pour réaliser un arrangement d'empilement (48); et
- réaliser les liaisons de cet arrangement d'empilement (48) aux surfaces de contact entre les éléments alternativement empilés d'électrolyte à trois couches (36) et d'interconnexion (38).

2. Procédé selon la revendication 1, dans lequel ladite opération de chauffage est caractérisée de plus par:
- une élévation de température des éléments respectifs d'électrolyte à trois couches (36) et des éléments d'interconnexion (38) par un quelconque ou une combinaison de procédés de chauffage choisis parmi le groupe constitué du chauffage par radiation, chauffage par convection et chauffage à micro-ondes, à une température suffisante pour fritter les matériaux céramiques respectifs à au moins 25% du retrait total du matériau résultant du frittage des matériaux céramiques à la densité finale désirée.

3. Procédé selon la revendication 1, dans lequel ladite opération de chauffage est caractérisée de plus par:
- une élévation de température des éléments respectifs d'électrolyte à trois couches (36) et des éléments d'interconnexion (38) à une température suffisante pour fritter les matériaux céramiques respectifs à un pourcentage de la densité finale désirée pour lesdits matériaux de telle sorte qu'un chauffage ultérieur et un frittage dudit arrangement d'empilement (48) entraînera un retrait compatible de tous les matériaux céramiques dans ledit arrangement d'empilement (48) et que le matériau céramique d'interconnexion (33) ne diffusera pas dans les couches adjacentes dudit arrangement d'empilement (48) pendant le chauffage ultérieur et le frittage dudit arrangement d'empilement (48).

4. Procédé selon la revendication 1, caractérisé de plus par:
- le mouillage d'une surface desdits éléments d'interconnexion (38) et de la surface d'anode desdits éléments d'électrolyte à trois couches (36) avec un agent de liaison pour anode, ledit agent de liaison pour anode comportant des poudres dudit matériau céramique d'anode (30), des matériaux formant composition liante et un solvant, mélangés en une bouillie visqueuse;
- le mouillage de la surface opposée desdits éléments d'interconnexion (38) et de la surface de cathode (32) desdits éléments d'électrolyte à trois couches (36) avec un agent de liaison pour cathode comportant des poudres dudit matériau céramique de cathode (32), lesdits matériaux formant composition liante et un solvant, mélangés en une bouillie visqueuse.

5. Procédé selon la revendication 4, dans lequel lesdits éléments d'interconnexion comportent chacun des matériaux céramiques d'anode et des matériaux céramiques de cathode prenant en sandwich des matériaux céramiques d'interconnexion dans une configuration désirée.

6. Procédé selon l'une des revendications 1 à 5, caractérisé de plus par:
- la sélection d'un cermet de métal cobalt ou nickel avec un oxyde de zirconium stabilisé pour l'anode (30), un lanthanate de manganèse dopé au strontium pour la cathode (32), un oxyde de zirconium stabilisé à l'oxyde d'yttrium pour l'électrolyte (31), et un lanthanate de chrome dopé pour l'interconnexion (33);
- la sélection de matériaux de composition liante de l'agent de liaison pour anode et de l'agent de liaison pour cathode compatibles avec lesdits matériaux d'anode (30), de cathode (32), d'électrolyte (31) et d'interconnexion (33), lesdits matériaux de composition liante comportant un liant choisi dans le groupe constitué du caoutchouc synthétique, des plastiques, de l'alcool polyvinylique, de la résine butyryl-polyvinylique, et de compositions polymères qui se décomposent à la chaleur sans création de liaisons croisées, et un plastifiant choisi dans le groupe constitué du phthalate butyl-benzylique et des solvants du radical phthalate; et
- la sélection de l'alcool isopropylique comme solvant dudit agent de liaison pour anode et dudit agent de liaison pour cathode.

7. Sous-ensemble pour une cellule à combustible en oxyde solide monolithique (10) comportant une pluralité de cellules empilées (40), chaque cellule (40) comportant une cathode (32), un électrolyte (31), et une anode (30), lesdites cellules étant séparées l'une de l'autre par une interconnexion (33), l'appareil comportant:
- une pluralité d'éléments d'électrolyte (31) , chacun comportant des couches respectives au moins partiellement frittées de matériaux céramiques de cathode (32), de matériaux céramiques d'électrolyte (31) et de matériaux céramiques d'anode (30), lesdits éléments d'électrolyte (31) étant configurés pour présenter des passages pour l'écoulement du combustible et de l'oxydant, lesdits éléments d'électrolyte (31) présentant une forme selon une configuration désirée;
- une pluralité d'éléments d'interconnexion (38), chacun comportant des matériaux céramiques d'interconnexion (33) au moins partiellement frittés selon une configuration désirée, lesdits éléments d'interconnexion (38) étant empilés alternativement avec ladite pluralité d'éléments d'électrolyte (31) pour réaliser un arrangement d'empilement (48); et
- des moyens formant agent de liaison pour fixer lesdits éléments d'interconnexion (38) au moins partiellement frittés auxdits éléments d'électrolyte (31) au moins partiellement frittés.

8. Sous-ensemble selon la revendication 7, dans lequel lesdits moyens formant agent de liaison comportent de plus:
- un agent de liaison pour anode comportant des poudres des matériaux céramiques d'anode (30), une composition liante et un solvant, mélangés en une bouillie visqueuse pour réaliser la liaison entre une surface desdits éléments d'interconnexion (38) et ladite anode (30) des éléments d'électrolyte (31); et
- un agent de liaison pour cathode comportant des poudres des matériaux céramiques de cathode (32), ladite composition liante et un solvant, mélangés en une bouille visqueuse pour réaliser la liaison entre la surface opposée desdits éléments d'interconnexion (38) et ladite cathode desdits éléments d'électrolyte (31).

9. Sous-ensemble selon la revendication 8, dans lequel ledit agent de liaison pour anode et ledit agent de liaison pour cathode comportent de plus chacun des matériaux céramiques d'interconnexion ou de la poudre de platine mélangés dans lesdites bouillies visqueuses respectives.

10. Sous-ensemble selon la revendication 8, dans lequel lesdits moyens formant agent de liaison comportent de plus:
- un matériau en pâte de céramique comportant au moins un des matériaux choisis dans le groupe constitué des ciments métalliques, des céramiques vitreuses, d'un matériau formant un sol-gel organo-métallique et de l'oxyde de zirconium.
